# FASCICULE DE BREVET EUROPEEN

(11) **EP 0 558 405 B1**
(45) Date de publication et mention de la délivrance du brevet: **29.04.1998**
(21) Numéro de dépôt: 93400470.6
(22) Date de dépôt: 24.02.1993
(51) Int. Cl.: G01J 1/04, G01J 1/42, B64F 1/20

(54) **Dispositif d'évaluation du balisage lumineux notamment sur les pistes et les voies d'accès des avions**
Vorrichtung zur Kontrolle der Beleuchtung der Fahr- und Rollbahnen eines Flughafens
Device for inspecting the lighting on airfield runways and taxiways

(30) Priorité: 25.02.1992 FR 9202182
(43) Date de publication de la demande: 01.09.1993
(73) Titulaire: AEROPORT DE PARIS, 75675 Paris Cédex 14 (FR)
(72) Inventeur: Cernon, Robert, F-91200 Athis-Mons (FR)
(74) Mandataire: Thévenet, Jean-Bruno

(56) Documents cités:
- DE-A- 3 041 396
- DE-B- 1 240 295
- GB-A- 921 703
- GB-A- 1 454 272
- US-A- 4 430 000

## Description

La présente invention concerne un dispositif pour l'évaluation photométrique des feux de balisage des pistes et des voies de circulation implantés notamment sur les plates-formes aéroportuaires. En opération, cette évaluation ne nécessite aucun démontage des feux sur le site. D'une façon plus générale, le dispositif selon l'invention sera adopté à chaque fois qu'une évaluation photométrique de sources lumineuses à faisceaux étroits sera nécessaire.

Actuellement, l'évaluation des feux de balisage s'effectue principalement dans des laboratoires de photométrie, hors du site, sur des bancs mécaniques qui disposent de plusieurs axes de liberté afin de balayer la totalité de l'angle solide du feu et d'y prélever les intensités lumineuses correspondantes. Ces tests sont conduits suivant les principes et les règles de l'échantillonnage. Ils nécessitent le démontage des feux de leurs embases. De plus, l'évaluation passe par l'acquisition de 100 à 200 points de mesure de l'intensité lumineuse afin d'en tracer les courbes isocandela et les valeurs moyennes dans les ellipses types. Une évaluation très empirique est ainsi possible à partir du boîtier décrit dans la demande GB 92 1703, mais elle ne saurait satisfaire les normes en vigueur.

Il résulte de cette méthodologie de nombreux inconvénients, notamment : elle est d'un coût économique élevé ; elle ne prend pas en compte les paramètres d'environnement ou d'alimentation des feux ; les manipulations de prélèvement risquent de modifier l'état de salissures internes et externes ; et relevant du principe de l'échantillonnage, l'évaluation n'est pas exhaustive comme le recommandent les normes en vigueur (annexe 14 de l'OACI). Seul un contrôle à cent pour cent permet cette assurance.

Aussi, le document de brevet GB-A-1 454 272 présente un dispositif qui permet la détermination, sur site, de l'intensité lumineuse de feux de balisage de pistes. Il comporte un véhicule 13 sur lequel est disposé un alignement de six détecteurs optiques 1 dont l'axe de chacun d'entre eux fait un angle différent avec l'horizontale (de 1° à 6°). Une boucle inductive 6 permet de relever le passage du dispositif au dessus d'un feu et de déterminer une distance à laquelle une mesure de l'intensité lumineuse sera réalisée.

Toutefois, cette mesure unique implique d'une part une évaluation de cette distance avec une précision suffisante et d'autre part une disposition géométrique complexe de ces capteurs pour permettre à la fois une rapidité de la mesure et une précision acceptable pour celle-ci.

Tout décalage par rapport à l'axe de mesure ou toute dérive dans la mesure des distances sera interprétée comme un dysfonctionnement du feu entraînant un risque d'erreur d'interprétation ou même une absence d'évaluation.

De plus, les mesures effectuées, si elles se réfèrent à un réseau lumineux organisé, ne représentent qu'un faible échantillonnage, c'est-à-dire six valeurs particulières pour un ensemble qui en comporte une infinité, l'analyse du flux lumineux se limitant à une seule tranche verticale de l'angle solide d'émission. La représentation obtenue est donc discontinue. Par ailleurs, l'information unique par feu ne permet aucun traitement informatique, ni aucune récupération d'information en cas d'erreur ou d'absence d'acquisition, interdisant toute analyse des causes des atténuations éventuelles.

Il peut également être noté que la probabilité de numérisation du point maximal du faisceau émis est plus faible du fait de la détection dans un plan unique.

La présente invention vise notamment à s'affranchir de ces contraintes et à réaliser un dispositif de structure simple qui permet une mesure en continu de l'intensité lumineuse et fournit directement une donnée proportionnelle au flux lumineux produit par le feu de balisage.

Ces buts sont atteints par un dispositif selon la revendication 1.

Ce dispositif permet de capter le flux lumineux par l'intermédiaire d'un panneau opalescent qui limite les effets de la loi "cosinus" de réflexion partielle et isole photométriquement l'espace inteme de l'environnement. Ensuite cet espace inteme est utilisé à réfléchir un grand nombre de fois et aléatoirement la lumière piégée de façon à produire sur chaque partie de la surface interne un flux uniforme dont la somme est proportionnelle au flux produit par la balise. Ainsi, le dispositif selon l'invention réalise l'intégration du flux lumineux reçu.

La face de réflexion diffusante peut comporter cinq panneaux formant avec la face avant un parallélépipède ou bien une enveloppe demi-cylindrique limitée par un couvercle et une base, tous deux plans et demi-circulaires.

La base est munie d'un récupérateur diffuseur de lumière qui diffuse une partie du flux lumineux émis par le faisceau à mesurer vers l'intérieur du caisson, au travers d'une ouverture pratiquée dans cette base.

Avantageusement, la base peut comporter au moins un détecteur magnétique pour détecter le passage au-dessus d'un feu émettant le faisceau à mesurer.

Typiquement, le capteur est constitué par au moins une cellule photoélectrique, ou bien une photodiode, un phototransistor, ou encore une photorésistante, disposée hors du trajet principal du faisceau lumineux et la face avant est réalisée en un panneau plan en méthacrylate, en polyéthylène opale, ou encore en polycarbonate.

De préférence, le caisson comporte une source lumineuse interne auxiliaire destinée à permettre un contrôle de la réponse du capteur.

La nacelle peut de plus être relevée par un système de leviers et d'articulations de façon à assurer une garde au sol suffisante pendant l'acheminement sur le site de mesure.

D'autres caractéristiques et avantages ressortiront mieux à la lecture de la description qui va suivre faite, à titre indicatif et non limitatif, en regard des dessins annexés sur lesquels :
- la figure 1 représente une vue en perspective du dispositif de mesure de l'invention en présence d'un feu de balisage,
- la figure 2 est une vue de dessus en coupe du dispositif de la figure 1,
- la figure 3 est une vue avant du dispositif de la figure 1,
- la figure 4 représente le dispositif de la figure 1 muni d'un récupérateur diffuseur de lumière, et
- la figure 5 montre l'intégration du dispositif de mesure dans l'ensemble d'évaluation du balisage lumineux selon l'invention.

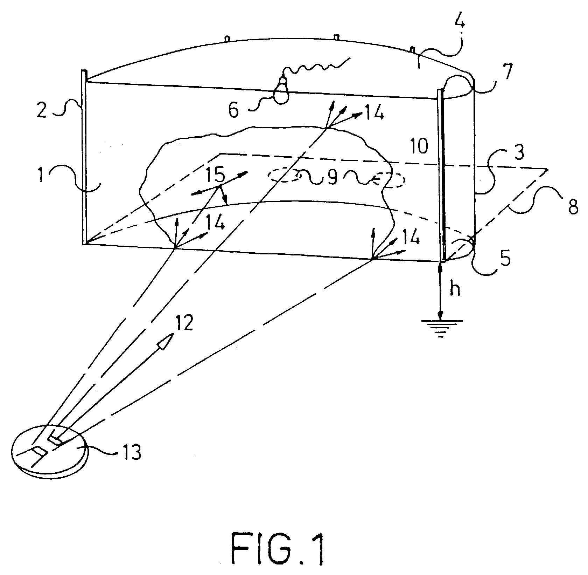

Comme le montre la figure 1, le dispositif de mesure de l'intensité lumineuse des feux de balisage se présente sous la forme d'un caisson fermé 10 dans lequel est disposé un capteur de flux lumineux 6. Sa fonction est de réfléchir un grand nombre de fois et aléatoirement la lumière piégée à l'intérieur du caisson de façon à produire sur chaque partie de sa surface intérieure un flux uniforme dont la somme est égale au flux produit par un feu de balisage 13, réalisant ainsi l'intégration du flux lumineux reçu dans des conditions satisfaisantes.

Si l'on utilise directement le faisceau émis par le feu, on n'obtient pas une intégration satisfaisante car les gradients lumineux d'origine sont trop important pour que l'uniformité soit acceptable. Il est donc nécessaire de diffuser préalablement le faisceau lors de son entrée dans l'intégrateur. A cet effet, un panneau plan opalescent et blanc ferme la face avant du caisson. Ce panneau a comme fonction secondaire d'isoler photométriquement l'espace de mesure de l'extérieur. En effet, en son absence, la réflectance variable du sol entourant la balise conduirait à des couplages photométriques variables entre les deux espaces.

Le caisson comporte une enveloppe à parois minces, métalliques de forme demi-cylindrique 3 fermée en haut et en bas par deux panneaux minces métalliques demi-circulaires 4 et 5. Une face avant 1 composée d'un panneau plan, typiquement en méthacrylate, en polyéthylène opale ou encore en polycarbonate, vient fermer le caisson et assure une diffusion, de manière aléatoire (omnidirectionnelle) 14, du faisceau 12 issu d'un feu de balisage 13.

Les faisceaux produits par les feux sont intenses et contenus dans de petits angles solides qui définissent la trajet principal du faisceau. Les angles d'ouverture courants sont de façon non limitative de l'ordre de ± 5°en azimut et de 0 à 7° en site.

La réponse photométrique du dispositif de mesure est optimale à une distance déterminée de la source lorsque le feu est propre. En fonction du degré de salissure du feu, la valeur maximale de l'intensité lumineuse détectée varie tout en se situant à une distance variable de la source. Cette particularité de la réponse du capteur, favorisé par la structure demi-cylindrique du caisson, permet de sélectionner les causes des affaiblissements constatés à condition de disposer de relevés linéaires serrés. Ceux-ci s'obtiennent grâce à un ensemble d'évaluation du balisage lumineux, ensemble mobile pouvant rouler jusqu'à 30-35 km/h. Ainsi la fonction axiale d'une piste de 3 600 mètres peut être analysée en 10 minutes.

De même, comme le montre la figure 1, la base 5 pourra se prolonger au delà de l'enveloppe 3 et recevoir alors au moins un détecteur de masses magnétiques 9 pour signaler le passage du dispositif au dessus d'un feu de balisage 13 dont on désire mesurer le niveau de l'intensité lumineuse émise.

Pour cette configuration dans laquelle les feux comportent des éléments magnétiques, il est nécessaire de réaliser la base 5 en un matériau amagnétique.

Le capteur 6 fait partie d'une chaîne d'acquisition et de numérisation des données qui comprend également un sous-ensemble de repérage du site de mesure (mesure des distances, détection des masses métalliques des feux, comptage des sources lumineuses) qui ne sera pas décrite dans le détail, ne présentant pas de difficulté particulière de réalisation pour l'homme de l'art.

Un feu est une structure mécanique et optique dont chaque composant est déterminé précisément. Il comporte notamment une lampe, un prisme, des lentilles et un réflecteur. Un filtre, un relais shunt viennent compléter cet ensemble qui est encastré dans la chaussée ou hors sol et dont l'évaluation est faite à la volée. Il fait l'objet de plusieurs dizaines de relevés dont seulement une ou deux seront retenus pour l'évaluation.

Les principales causes de déficits lumineux d'un feu de balisage proviennent de:
- Salissures externes par dépôts
- Présence d'eau à l'intérieur du feu
- Défaut partiel d'alimentation électrique
- Dysfonctionnement du relais shunt
- Filament de lampe déformé
- Spires de filament en contact
- Réflecteur dégradé
- Prisme cassé
- Désordre mécanique : lampe, réflecteur, lentille, filtre.

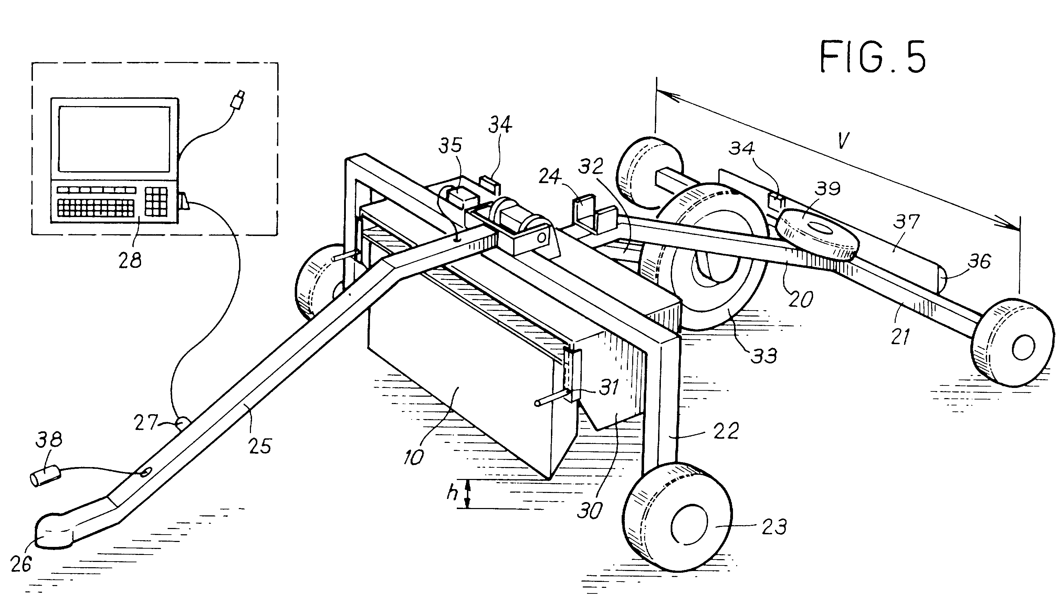

Des renforts de structure 2, s'ils existent, sont disposés à l'extérieur du volume afin de ne pas créer de discontinuité des réflexions diffuses. Au moins trois d'entre eux sont prolongés afin de fournir des points d'ancrage 7 du dispositif sur une nacelle de l'ensemble d'évaluation du balisage qui sera décrit plus avant en regard de la figure 5.

L'intérieur du volume est revêtu d'une peinture industrielle de couleur blanc mat, répartie sur plusieurs couches afin d'obtenir un facteur de réflexion élevé dont les caractéristiques de réflexion diffuse sont proches de celles de l'oxyde de baryum (facteur de luminance voisin de 1).

Une ouverture pratiquée dans le panneau supérieur permet la fixation du capteur 6 qui peut par exemple être placé sensiblement au centre et en haut de la face avant 1, la face sensible orientée vers la courbure du demi-cylindre. Un placement de ce capteur sur les autres bords internes de la face avant (bas, côtés) est également possible, l'accès au capteur étant alors réalisé par une ouverture pratiquée au droit de celui-ci. Le capteur 6 qui peut consister en une cellule photo-électrique, un phototransistor, une photodiode ou bien encore une photorésistante peut lui-même être équipé d'un diffuseur-intégrateur d'atténuation 1/10e. Une variante du dispositif, qui évite l'inconvénient d'une réponse électrique limitée, consiste à utiliser une cellule équipée d'un intégrateur de lumière qui n'atténue pas sa réponse électrique.

La vue de la figure 1 permet de montrer la projection d'impacts sur l'écran du faisceau principal 12 avec les effets de la diffusion 14 dans le panneau. La réflexion diffusante des surfaces traitées à la peinture spéciale apparaît en 15.

Afin de limiter les phénomènes de dérive thermique de la cellule photoélectrique, l'enceinte demi-cylindrique peut être équipée d'une résistance chauffante associée à un moyen de contrôle qui maintient une température stable à l'intérieur.

Il doit être noté que la configuration en demi-cylindre du caisson de l'invention, si elle assure les meilleurs résultats en matière d'homogénéisation du flux, n'est pas l'unique configuration possible et il est parfaitement envisageable, pour le caisson 10, un volume parallélépipèdique, demi-sphérique ou bien encore demi-ellipsoïdique. Il faudra bien sûr veiller à ce que l'intérieur de ce volume soit traité comme indiqué précédemment et à ce que la face avant comporte un matériau opalescent.

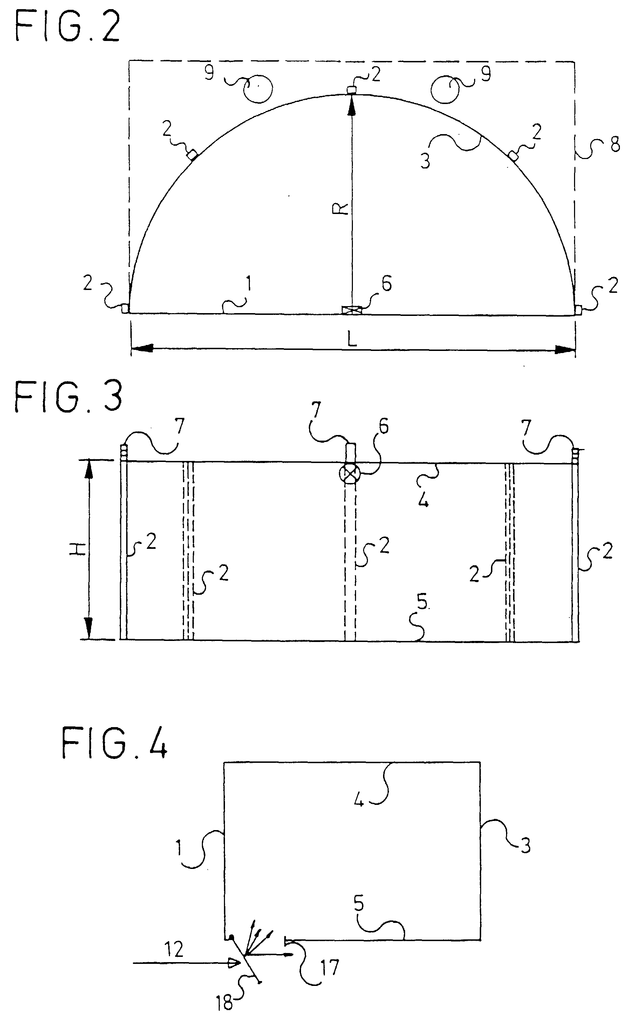

Les figures 2 et 3 représentent respectivement une vue de dessus en coupe et une vue de face du dispositif de mesure dans le mode préférentiel de réalisation de la figure 1. On peut observer plus nettement les différents points d'ancrage 7 qui permettent de fixer le dispositif ainsi que la disposition particulière du capteur 6 contre la face avant 1, hors du trajet principal du faisceau lumineux du feu dont il est protégé contre toute captation directe.

La figure 4 représente une variante de réalisation du dispositif de la figure 1 dans lequel il est ajouté une bavette diffusante. En effet, la mobilité de l'appareil selon l'invention oblige à maintenir entre sa base et le sol une distance minimale de préservation h (voir figure 1). De ce fait, une partie du faisceau n'est pas captée et passe sous l'appareil. Pour récupérer ce flux, le dispositif peut être équipé d'une bavette diffusante 18. La partie du faisceau initialement non captée est alors récupérée par une ouverture rectangulaire 17 pratiquée dans la paroi de la base 5 et occupant toute la largeur de la face avant 1. Le capteur fonctionne alors selon deux modes : un mode "normal" et un mode "de contact", le mode "de contact" se produisant lorsque la bavette vient en contact avec le feu. Dans ce second mode, le capteur donne une réponse très élevée et il est alors nécessaire de traiter et sélectionner les informations utiles. Au contraire, dans le mode "normal", l'avantage du dispositif à bavette est d'être beaucoup moins sensible aux variations du niveau du capteur 6 par rapport au feu 13.

La figure 5 montre l'ensemble d'évaluation du balisage selon l'invention intégrant le dispositif de mesure précité.

Un châssis 20 muni d'un essieu 21 supporte un cadre mobile 22 qui assure sur un axe vertical un débattement important sur plus de 130°. Une large voie V et des roues basses pression 23 stabilisent et amortissent les vibrations.

Le cadre mobile 22 supporte un timon 25 équipé d'une attache standard 26 pour un véhicule tracteur, et d'un connecteur 27 pour le raccordement à un ensemble d'acquisition et de numérisation 28 installé dans ce véhicule tracteur.

Le dispositif de mesure 10 est monté sur une nacelle 30 suspendue avec un mécanisme de blocage à deux positions 31 avec leviers et articulations qui permet de la relever de façon à assurer une garde au sol suffisante pendant l'acheminement sur le site de mesure.

En configuration mesure, un bras articulé à ressort 32 permet un contact permanent d'une roue codeuse 33 avec le sol, afin que le système puisse évaluer précisément la distance parcourue entre chaque feu 13. Pour cela, deux interrupteurs 34 indiquent la position de la roue codeuse 33 et du dispositif de mesure 10. Un boîtier d'interface électronique 35 est fixé sur la nacelle 30 permettant l'interfaçage entre le capteur 6 et le convertisseur intégré dans l'ensemble informatique d'acquisition et de numérisation 28.

L'ensemble des pièces est recouvert d'une peinture noire mate pour éviter les réflexions parasites et tous les câbles cheminent dans les tubes d'ossature du châssis et du timon. Afin de permettre le transport du dispositif de mesure sur les différents sites, notamment par l'intermédiaire du réseau routier national, un roue de secours 39 est fixée sur le châssis 20 qui est en outre muni d'un éclairage arrière 36, d'un porte plaque minéralogique 37 et d'une prise 38 de liaison électrique avec le véhicule.

Le dispositif de mesure permet d'explorer l'ensemble d'une fonction de balisage en roulage continu lorsque ce dispositif, monté sur l'ensemble d'évaluation, est déplacé par un véhicule tracteur. La séquence de mesure est initialisée par un opérateur présent sur le véhicule tracteur dont le cap peut être maintenu simplement par une visée rudimentaire placée à l'avant face au chauffeur, évitant ainsi toute déviation ou louvoiement important. En effet, au contraire du dispositif de l'art antérieur cité en tête de la description, un suivi parfait de l'axe des feux n'est pas indispensable.

Les résultats obtenus par ces mesures seront ensuite exploités en atelier à l'aide d'un logiciel spécifique qui restituera sous forme de graphes les niveaux d'intensités lumineuses recueillis au niveau de chaque feu de balisage d'une piste ou partie de piste déterminée.

La mise en oeuvre du dispositif selon l'invention a permis de mettre en évidence les incidences suivantes (le dispositif ayant pour dimensions : L = 100 cm, H = 50 cm, R =50 cm, h = 6 cm) par rapport à:
- l'angle d'abordage : la réponse du dispositif est stable jusqu'à ± 10°. Dépassé cette limite, il faut admettre une erreur de 0,5 % supplémentaire,
- la variation d'assiette du véhicule porteur; le maximum admissible est 1,5 cm pour une erreur additionnelle de 1 %,
- le déport d'axe de visée ; il a été retenu comme déport normal ± 10 cm, l'erreur supplémentaire est alors de 1,4 %. Lorsque le déport est de ± 20 cm, elle atteint 5,6%,
- le facteur de réflexion du sol ; la réponse du capteur n'est pas perturbée par la nature du sol (chaussée propre ou recouverte de traces de pneumatiques),
- la température ambiante ; les variations dépendent de la chaîne de mesure et de la cellule utilisée, et
- le temps de réponse de la chaîne de mesure ; il faut choisir un matériel compatible avec le temps d'acquisition des données et sa fréquence.

L'ensemble d'évaluation du balisage produit ainsi, de par sa structure particulière, une réponse optimale mais pouvant être variable d'un feu à l'autre selon leur degré de salissure. En l'absence de ces salissures, le dispositif de mesure est réglé pour délivrer une réponse maximale pour chaque distance feu-caisson relevée. Une réponse non conforme est alors le signe d'un degré élevé de salissure ou bien encore d'un désordre interne du feu, l'analyse des différentes causes de déficit lumineux pouvant être déterminée par l'étude de la forme de la réponse en fonction de la distance fournie par le dispositif de mesure. En effet, cette analyse dynamique que propose l'invention permet une corrélation simple entre le niveau de réponse observé sans salissures et celui résultant de ces seules salissures ou de désordre internes des feux.

Il est intéressant de noter que les feux de balisages autres que celui analysé n'ont guère d'influence sur la réponse du capteur, le véhicule tracteur masquant tous les feux situés en amont de celui qui est analysé. Toutefois, il a été vérifié qu'en absence de pluie, brume ou brouillard, seules circonstances permettant de valider les mesures, l'erreur engendrée par le flux parasite des autres feux est assez négligeable et, en tout cas est assimilable à une constante dont il pourra être tenu compte lors du dépouillement.

Afin de limiter l'encombrement de l'ensemble d'évaluation selon l'invention lorsque celui-ci n'est pas utilisé, le cadre mobile 20 est muni d'une fixation 24 destinée à recevoir le timon 25, mobile également autour d'un axe horizontal, donc articulé en site et en azimut, qui se retrouve alors dans une position repliée.

## Revendications

1. Dispositif pour l'évaluation in situ du flux lumineux de faisceaux intenses et étroits notamment de feux de balisage de pistes comprenant un châssis tracté (20) et une roue codeuse (33) pour la détermination de la distance parcourue entre deux feux, le franchissement de ces feux étant signalé par un détecteur (9), caractérisé en ce qu'il comporte en outre une nacelle (30) comportant un caisson fermé (10) dans lequel est disposé un capteur photo-électrique (6), ledit caisson comportant une face avant translucide (1) diffusant de manière omnidirectionnelle (14) à l'intérieur de ce caisson le flux lumineux issu du faisceau (13) à mesurer, et au moins une autre face (3,4,5), de forme demi-cylindrique ou demi-sphérique et dotée d'un haut pouvoir de réflexion diffusante, une ouverture (17) étant pratiquée dans la partie inférieure de ce caisson pour permettre au travers d'un diffuseur de lumière (18) une diffusion vers l'intérieur du caisson (10) d'une partie du flux lumineux émis au niveau du sol par le faisceau à mesurer (13).

2. Dispositif d'évaluation selon la revendication 1, caractérisé en ce que ledit caisson fermé comporte à sa partie inférieure (5) au moins un détecteur magnétique (9) pour détecter le passage au dessus d'un feu (12) émettant le faisceau à mesurer (13), cette partie inférieure (5) étant réalisée dans un matériau amagnétique.

3. Dispositif d'évaluation selon la revendication 1, caractérisé en ce que ledit capteur comporte, disposé hors du trajet principal du faisceau lumineux, au moins une cellule photo-électrique, une photodiode, un phototransistor, ou encore une photorésistante.

4. Dispositif d'évaluation selon la revendication 1, caractérisé en ce que ladite face avant translucide comporte un panneau plan en méthacrylate, en polyéthylène opale ou en polycarbonate.

5. Dispositif d'évaluation selon l'une quelconque des revendications 1 à 4, caractérisé en ce qu'il comporte en outre une source lumineuse inteme auxiliaire destinée à permettre un contrôle de la réponse du capteur (6).

6. Dispositif d'évaluation selon l'une quelconque des revendications 1 à 5, caractérisé en ce que le châssis tracté (20) est muni d'un essieu (21) et supporte un cadre mobile (22)recevant un timon (25) articulé en site et en azimut et repliable sur le châssis (20).

7. Dispositif d'évaluation selon l'une quelconque des revendications 1 à 6, caractérisé en ce que la nacelle (30) peut être relevée par un système de leviers et d'articulations de façon à assurer une garde au sol suffisante pendant l'acheminement sur le site de mesure.

8. Dispositif d'évaluation selon l'une quelconque des revendications 1 à 7, caractérisé en ce qu'il comporte en outre une résistance chauffante associée à un moyen de contrôle qui maintient une température stable à l'intérieur du caisson (10).

## Patentansprüche

1. Vorrichtung zur vor-Ort-Bewertung des Lichtstroms intensiver und schmaler Strahlen, insbesondere von Pisten-Befeuerungen, die ein gezogenes Chassis (20) und ein Kodierrad (33) für die Bestimmung der zwischen zwei Befeuerungen durchlaufenen Strecke aufweist, wobei das Überfahren dieser Befeuerungen von einem Detektor (9) angezeigt wird, dadurch gekennzeichnet, daß sie weiter eine Gondel (30) aufweist, die einen geschlossenen Kasten (10) trägt, in dem ein lichtelektrischer Meßfühler (6) angeordnet ist, wobei dieser Kasten eine lichtdurchlässige Vorderseite (1), die den vom zu messenden Strahl (13) kommenden Lichtstrom omnidirektional (14) ins Innere dieses Kastens diffundiert, und mindestens eine weitere Seite (3, 4, 5) halbzylindrischer oder halbkugeliger Form mit einem hohen diffusen Reflexionsvermögen aufweist, wobei eine Öffnung (17) im unteren Bereich dieses Kastens angebracht ist, um durch einen Lichtdiffusor (18) hindurch eine Diffusion eines Teils des in Höhe des Bodens vom zu messenden Strahl (13) ausgehenden Lichtstroms ins Innere des Kastens (10) zu ermöglichen.

2. Bewertungsvorrichtung nach Anspruch 1, dadurch gekennzeichnet, daß der geschlossene Kasten in seinem unteren Bereich (5) mindestens einen Magnetdetektor (9) aufweist, um die Überquerung einer Befeuerung (12) zu erfassen, die den zu messenden Strahl (13) aussendet, wobei dieser untere Bereich (5) aus einem nicht-magnetischen Material hergestellt wird.

3. Bewertungsvorrichtung nach Anspruch 1, dadurch gekennzeichnet, daß der Meßfühler außerhalb der Hauptstrecke des Lichtstrahls angeordnet mindestens eine lichtelektrische Zelle, eine Fotodiode, einen Fototransistor oder auch einen Fotowiderstand (photorésistante) aufweist.

4. Bewertungsvorrichtung nach Anspruch 1, dadurch gekennzeichnet, daß die lichtdurchlässige Vorderseite eine ebene Platte aus Methacrylat, aus Opal-Polyäthylen (poléthylène opale) oder aus Polycarbonat aufweist.

5. Bewertungsvorrichtung nach einem beliebigen der Ansprüche 1 bis 4, dadurch gekennzeichnet, daß sie weiter eine innere Hilfs-Lichtquelle aufweist, die dazu bestimmt ist, eine Kontrolle des Ansprechens des Meßfühlers (6) zu ermöglichen.

6. Bewertungsvorrichtung nach einem beliebigen der Ansprüche 1 bis 5, dadurch gekennzeichnet, daß das gezogene Chassis (20) mit einer Achse (21) versehen ist und einen beweglichen Rahmen (22) trägt, der ein Gestänge (25) aufnimmt, das in Elevationsrichtung und in Azimutrichtung angelenkt ist und auf dem Chassis (20) zusammengeklappt werden kann.

7. Bewertungsvorrichtung nach einem beliebigen der Ansprüche 1 bis 6, dadurch gekennzeichnet, daß die Gondel (30) von einem Hebel- und Gelenk-System angehoben werden kann, um während der Fahrt zum Meß-Standort eine ausreichende Bodenfreiheit zu gewährleisten.

8. Bewertungsvorrichtung nach einem beliebigen der Ansprüche 1 bis 7, dadurch gekennzeichnet, daß sie weiter einen Heizwiderstand aufweist, der einem Kontrollmittel zugeordnet ist, das im Inneren des Kastens (10) eine stabile Temperatur aufrechterhält.

## Claims

1. Apparatus for in-situ evaluation of the light flux of intense and narrow light beams, in particular from runway beacon lights, the apparatus comprising a towed chassis (20), and an encoding wheel (33) for determining the distance travelled between two lights, with passage past such lights being indicated by a detector (9), which apparatus is further characterised in that it further includes a pod (30) comprising a closed box (10) in which a photoelectric sensor (6) is disposed, said box having a translucent front face (1) diffusing the light flux from the beam (13) to be measured omnidirectionally (14) inside the box, and at least one other semicylindrical or semi semicircular face (3, 4, 5) provided with high diffusing reflection power, an opening (17) being formed through the bottom portion of the box for diffusing a fraction of the light flux emitted at ground level by the beam to be measured (13) into the box (10) through a light diffuser (18).

2. Evaluation apparatus according to claim 1, characterised in that said closed box includes at least one magnetic detector (9) in its bottom portion (5) for the purpose of detecting when the apparatus passes over a light (12) emitting the beam to be measured (13), said bottom portion (5) being made of a non-magnetic material.

3. Evaluation apparatus according to claim 1, characterised in that said sensor includes, disposed away from the main path of the light beam, at least one photoelectric cell, photodiode, photo-transistor, or photoresistor.

4. Evaluation apparatus according to claim 1, characterised in that said translucent front face includes a plane panel of methacrylate, of opal polyethylene, or of polycarbonate.

5. Evaluation approach according to any one of claims 1 to 4, characterised in that it further includes an auxiliary light source placed inside the box for the purpose of monitoring the response of the sensor (6).

6. Evaluation apparatus according to any one of claims 1 to 5, characterised in that the towed chassis (20) is provided with an axle (21) and supports a moving frame (22) that receives a tow bar (25) that is hinged in elevation and in azimuth so as to be suitable for folding back on the chassis (20).

7. Evaluation apparatus according to any one of claims 1 to 6, characterised in that the pod (30) may be raised by a linkage of levers and hinges so as to provide adequate ground clearance while travelling to the measurement site.

8. Evaluation apparatus according to any one of claims 1 to 7, characterised in that it further comprises a heater resistance associated with control means that maintain a stable temperature inside the box (10).
